# EUROPEAN PATENT APPLICATION

(11) **EP 4 290 643 A1**
(43) Date of publication of application: **13.12.2023**
(21) Application number: 21925195.6
(22) Date of filing: 09.02.2021
(51) Int. Cl.: H01M 10/0587, H01M 10/0525

(54) **ELECTROCHEMICAL APPARATUS AND ELECTRONIC APPARATUS**

(71) Applicant: Ningde Amperex Technology Ltd., Ningde, Fujian 352106 (CN)
(72) Inventor: LI, Beibei, Ningde, Fujian 352106 (CN); SU, Yisong, Ningde, Fujian 352106 (CN)
(74) Representative: Klunker IP Patentanwälte PartG mbB
(86) International application number: PCT/CN2021/076385
(87) International publication number: WO 2022/170530

(57) **Abstract**

An electrochemical device is disclosed, including a housing, an electrode assembly, a first bonding piece, and a second bonding piece. The electrode assembly includes electrode plates and a separator. The electrode plates include a first electrode plate and a second electrode plate. The separator is disposed between the first electrode plate and the second electrode plate. The electrode assembly is of a wound structure and located in the housing. In a winding direction, the electrode assembly includes a first section, a first bend section, a second section, and a second bend section that are connected sequentially. An outermost coil of the first section is the separator. The first bonding piece is configured to bond an outermost coil of the electrode plates in the first section together with the separator located outside the outermost coil of the electrode plates in the first section. A bonding force between the first bonding piece and the outermost coil of the electrode plates in the first section is 3 N/m to 30 N/m. The second bonding piece is configured to bond an outermost coil of the separator in the first section together with the housing. A bonding force between the second bonding piece and the housing is 20 N/m to 150 N/m. This application further provides an electronic device containing the electrochemical device. This application can improve the anti-drop performance and safety of the electrochemical device.

## Description

### TECHNICAL FIELD

This application relates to the field of energy storage, and in particular, to an electrochemical device and an electronic device containing the electrochemical device.

### BACKGROUND

Electrochemical devices (such as a battery) are widely used in electronic products such as an electronic mobile device, an electric tool, and an electric vehicle, and people are posing higher requirements on safety performance of the electrochemical devices. An electronic product in use is prone to mechanical abuse such as drop, collision, and vibration, thereby being vulnerable to a short circuit within the electrochemical device, causing failure, and reducing safety of the product in use.

### SUMMARY

In view of the disadvantages of the prior art, it is necessary to disclose an electrochemical device that is conducive to improving the anti-drop performance and safety.

In addition, it is necessary to provide an electronic device containing the electrochemical device.

This application provides an electrochemical device, including a housing, an electrode assembly, a first bonding piece, and a second bonding piece. The electrode assembly includes electrode plates and a separator. The electrode plates include a first electrode plate and a second electrode plate. The separator is disposed between the first electrode plate and the second electrode plate. The electrode assembly is of a wound structure and located in the housing. In a winding direction, the electrode assembly includes a first section, a first bend section, a second section, and a second bend section that are connected sequentially. An outermost coil of the first section is the separator. The first bonding piece is configured to bond an outermost coil of the electrode plates in the first section together with the separator located outside the outermost coil of the electrode plates in the first section. A bonding force between the first bonding piece and the outermost coil of the electrode plates in the first section is 3 N/m to 30 N/m. The second bonding piece is configured to bond an outermost coil of the separator in the first section together with the housing. A bonding force between the second bonding piece and the housing is 20 N/m to 150 N/m.

In this application, the separator is prolonged and used as an ending, so as to form a protection layer to effectively increase the capability of the electrode assembly in resisting mechanical shocks. Moreover, by virtue of the first bonding piece and the second bonding piece, the electrode assembly and the housing are bonded and fixed together, thereby suppressing the drift of the electrode assembly in the housing during mechanical abuse, and reducing the hazards of electrolyte leakage, short circuits, and fire caused by burst of the housing. Further, this application avoids increase of the hazards of drift of the electrode assembly in the housing during mechanical abuse when the bonding force of the first bonding piece and the second bonding piece is deficient; and also avoids increase of the hazards of tearing the current collector of the electrode plate caused by a relatively large stress when the bonding force is exceptionally large, where the stress is transmitted to the electrode assembly during mechanical abuse and is not released in time. In addition, when the electrode assembly drifts in the housing and pulls the separator, the separator is made of a material that is highly flexible, and therefore, is not prone to be torn under stress, thereby alleviating the safety problems caused by probable tearing at the end part of the current collector.

In some possible implementations, a ratio of an overlap area to an area of the second bonding piece is greater than or equal to 70%, where the overlap area is an area of overlap between an orthogonal projection of the first bonding piece on a plane in which the second bonding piece is located and the second bonding piece. Therefore, the bonding force of the first bonding piece coordinates well with the bonding force of the second bonding piece to implement firmer bonding between the electrode assembly and the housing.

In some possible implementations, an outermost coil of the electrode plates in the first section is the first electrode plate. The first electrode plate includes a first current collector and a first active material layer disposed on the first current collector. The outermost coil of the first current collector in the first section includes an outer surface. The outer surface is oriented toward the outermost coil of the separator in the first section, and the outer surface is not coated with the first active material layer.

In some possible implementations, the outer surface is coated with a ceramic layer. The ceramic layer is configured to increase friction between the first bonding piece and the outermost coil of the first electrode plate in the first section, so as to increase the bonding force in between.

In some possible implementations, in a winding direction, an end part of the separator is located at the first bend section. The electrochemical device further includes a third bonding piece. The third bonding piece is configured to bond an outer surface of the first bend section and bond the end part of the separator, so that the end part of the separator is fixed and that the first bonding piece exerts little impact on the thickness of the electrode assembly. This avoids increase of the thickness of the electrode assembly caused by the third bonding piece that bonds the first section or the second section.

In some possible implementations, the third bonding piece is further configured to bond an outer surface of at least one of the first section or the second section, so as to effectively fix the end part of the separator.

In some possible implementations, an outermost coil of the second section is the first electrode plate. In the winding direction, the end part of the first electrode plate is located in the second section. The electrochemical device further includes a fourth bonding piece. The fourth bonding piece is configured to bond an outer surface of the second bend section and bond the end part of the first electrode plate, so as to fix the end part of the first electrode plate. Moreover, the outermost coil of the second section is the first electrode plate, and the hardness of the electrode plate is usually high, thereby increasing the hardness of the electrode assembly, increasing the capability of the electrode assembly in resisting mechanical shocks, and improving safety.

In some possible implementations, the electrochemical device further includes a fifth bonding piece. The fifth bonding piece is configured to bond the outermost coil of the first electrode plate in the second section together with the housing, thereby further alleviating the drift of the electrode assembly in the housing when the electrochemical device is mechanically abused.

In some possible implementations, the outermost coil of the second section is the separator. The electrochemical device further includes a sixth bonding piece. The sixth bonding piece is configured to bond the outermost coil of the electrode plates in the second section together with the separator located outside the outermost coil of the electrode plates in the second section. In this way, the outermost coil of the electrode plates in the second section and the separator located outside the outermost coil of the electrode plates in the second section are bonded and fixed together.

This application further provides an electronic device, including the electrochemical device. The electronic device further includes an accommodation chamber and a seventh bonding piece. The electrochemical device is disposed in the accommodation chamber. The seventh bonding piece is configured to bond the housing oriented to the first section together with the accommodation chamber. Therefore, when the electronic device is mechanically abused, the stress generated by the electronic device pulling the housing is transmitted through the seventh bonding piece, the housing, and the second bonding piece sequentially to the outermost coil of the separator in the first section. The separator is made of a material that is highly flexible, and therefore, is not prone to be torn under stress, thereby avoiding the safety problems caused by probable tearing at the end part of the first current collector.

### BRIEF DESCRIPTION OF DRAWINGS

FIG. 1 is an overall schematic structural diagram of an electrochemical device in an implementation of this application;
FIG. 2 is a sectional view of an electrochemical device in an implementation of this application;
FIG. 3 is a sectional view of the electrochemical device shown in FIG. 2 and stripped of a housing according to some embodiments;
FIG. 4 is a sectional view of the electrochemical device shown in FIG. 2 and stripped of a housing according to other embodiments;
FIG. 5 is a schematic structural diagram of a housing of the electrochemical device shown in FIG. 1 before packaging;
FIG. 6 is a rear view of the electrochemical device shown in FIG. 2 and stripped of a housing;
FIG. 7 is a front view of the electrochemical device shown in FIG. 2 and stripped of a housing;
FIG. 8 is a sectional view of an electrochemical device in another implementation according to some embodiments of this application;
FIG. 9 is a sectional view of an electrochemical device in another implementation according to other embodiments of this application;
FIG. 10 is a sectional view of an electronic device in an implementation of this application; and
FIG. 11 is an overall schematic structural diagram of the electronic device shown in FIG. 10.

### Reference numerals:

Electronic device 1
Housing 10
Body portion 11
Sealing flap 12
First sealing film 13
Second sealing film 14
Electrode assembly 20
First electrode plate 21
Second electrode plate 22
Separator 23
First tab 30
Second tab 40
First bonding piece50
Sixth bonding piece 51
Second bonding piece 60
Fifth bonding piece 61
Third bonding piece 70
Fourth bonding piece 80
Head adhesive tape 90
End adhesive tape 91
Electrochemical device 100, 200
Accommodation chamber 101
Seventh bonding piece 102
First pit 130
Second pit140
First section 201
First bend section 202
Second section 203
Second bend section 204
First current collector 211
First active material layer 212
Second current collector 221
Second active material layer 222
Outer surface 2111
Inner surface 2112
End part 2100, 2200, 2300
Thickness direction T
Winding central axis C
Winding direction D

This application is further described below with reference to the following specific embodiments and the foregoing drawings.

### DETAILED DESCRIPTION OF EMBODIMENTS

The technical solutions in the embodiments of this application are clearly described below in detail with reference to the drawings hereof. Apparently, the described embodiments are merely a part of but not all of the embodiments of this application.

Unless otherwise defined, all technical and scientific terms used herein have the same meanings as usually understood by a person skilled in the technical field of this application. The terms used in the specification of this application are merely intended for describing specific embodiments but not intended to limit this application.

Some embodiments of this application are described below in detail with reference to drawings. To the extent that no conflict occurs, the following embodiments and the features in the embodiments may be combined with each other.

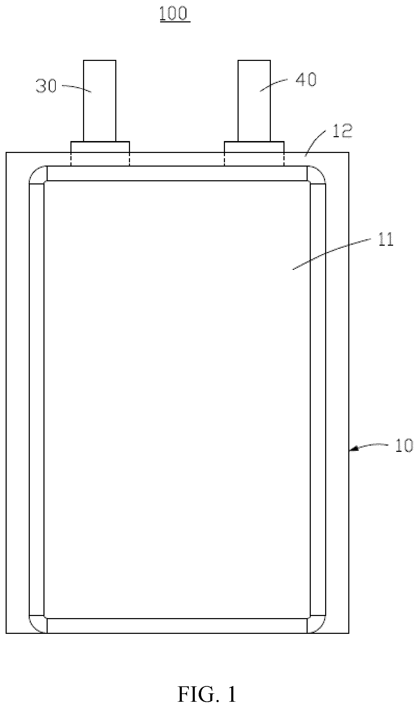

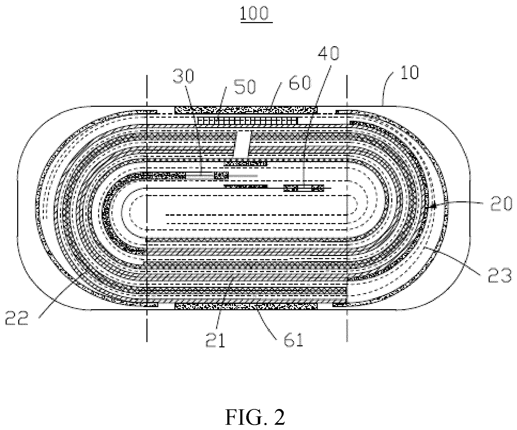

Referring to FIG. 1 and FIG. 2, an embodiment of this application provides an electrochemical device 100, including a housing 10, an electrode assembly 20, and an electrolytic solution (not shown in the drawings). The electrode assembly 20 includes electrode plates and a separator 23. The electrode plates include a first electrode plate 21 and a second electrode plate 22. The separator 23 is disposed between the first electrode plate 21 and the second electrode plate 22. The separator 23 is configured to prevent direct contact between the first electrode plate 21 and the second electrode plate 22, so as to reduce a risk of short circuit of the electrode assembly 20. The electrode assembly 20 is of a wound structure and disposed in the housing 10. To be specific, the first electrode plate 21, the separator 23, and the second electrode plate 22 are sequentially stacked and wound to form the electrode assembly 20.

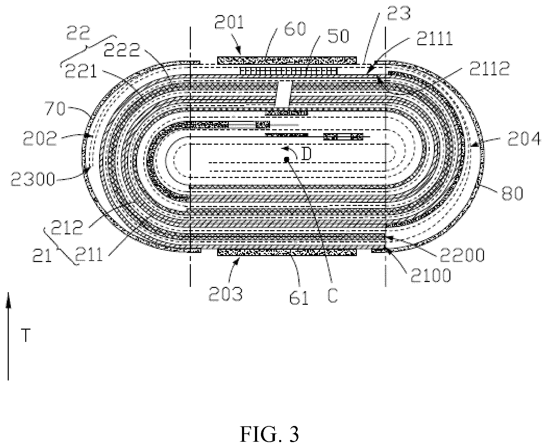

Also referring to FIG. 3, the first electrode plate 21 includes a first current collector 211 and a first active material layer 212 disposed on the first current collector 211. The second electrode plate 22 includes a second current collector 221 and a second active material layer 222 disposed on the second current collector 221. In some embodiments, the first electrode plate 21 is a positive electrode plate, and the second electrode plate 22 is a negative electrode plate. The first current collector 211 may be, but is not limited to, an aluminum foil or a nickel foil. The second current collector 221 may be, but is not limited to, a copper foil or a nickel foil.

In some embodiments, the separator 23 includes a porous substrate. In some embodiments, the separator 23 further includes a coating layer applied onto the porous substrate. The coating layer includes at least one of a binder or inorganic particles.

The porous substrate is a polymer film, a multilayer polymer film, or a nonwoven fabric, which, in each case, is formed by any one of the following polymers or by a composite of two or more of the following polymers: polyethylene, polypropylene, polyethylene terephthalate, polybutylene terephthalate, polyphthalamide, polyester, polyacetal, polyamide, polycarbonate, polyimide, polyether ether ketone, polyaryl ether ketone, polyetherimide, polyamideimide, polybenzimidazole, polyethersulfone, polyphenylene ether, cycloolefin copolymer, polyphenylene sulfide, and polyethylene naphthalene. Such polymers possess high thermal stability, and facilitate surface treatment, thereby making it easy to apply various coating layers. In addition, such polymers are highly flexible and bendable.

The binder includes at least one of the following polymers: a vinylidene fluoride-hexafluoropropylene copolymer, a vinylidene fluoride-trichloroethylene copolymer, a polyacrylate, polyacrylic acid, polyacrylic acid sodium salt, polyacrylonitrile, polyvinylpyrrolidone, polyvinyl acetate, an ethylene-vinyl acetate copolymer, polyimide, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, sodium carboxymethyl cellulose, lithium carboxymethyl cellulose, an acrylonitrile-styrene-butadiene copolymer, polyvinyl alcohol, polyvinyl ether, polytetrafluoroethylene, polyhexafluoropropylene, a styrene-butadiene copolymer, and polyvinylidene difluoride. Such polymers exert a strong bonding effect to bond inorganic particles together, or bond the separator 23 and the first electrode plate 21/the second electrode plate 22 together to form a whole, thereby increasing the hardness of the electrode assembly 20. Alternatively, in other embodiments, the binder may further include other polymers.

The inorganic particles include at least one of the following inorganic particles: silicon dioxide, aluminum oxide, titanium oxide, zinc oxide, magnesium oxide, hafnium dioxide, tin oxide, zirconium oxide, yttrium oxide, silicon carbide, boehmite, magnesium hydroxide, aluminum hydroxide, calcium titanate, barium titanate, lithium phosphate, lithium titanium phosphate, and lithium lanthanum titanate. Such inorganic particles possess high thermal stability, and can improve the high-temperature resistance performance of the electrochemical device 100.

As shown in FIG. 1 and FIG. 2, the electrochemical device 100 further includes a first tab 30 and a second tab 40. The first tab 30 and the second tab 40 are electrically connected to the first current collector 211 and the second current collector 221, respectively, and protrude from the housing 10 to connect to an external component (not shown in the drawing).

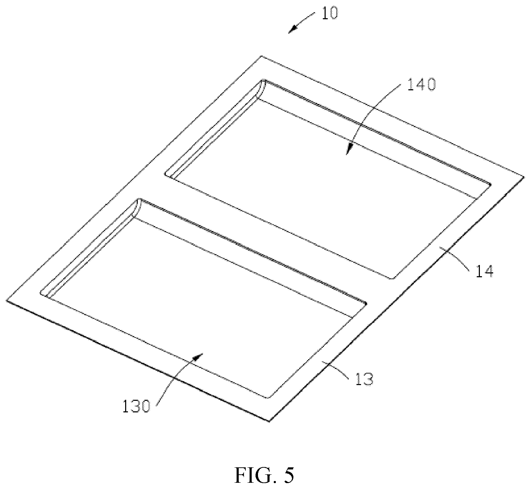

In some embodiments, the housing 10 may be a packaging bag obtained by sealing with a sealing film (such as an aluminum plastic film). In other words, the electrochemical device 100 may be a pouch-type cell. Referring to FIG. 1 and FIG. 5. the housing 10 includes a body portion 11 configured to accommodate the electrode assembly 20, and a sealing flap 12 connected to the body portion 11. The first tab 30 and the second tab 40 protrude from the sealing flap 12. The housing 10 may be formed by heat-sealing the first sealing film 13 and the second sealing film 14. The first sealing film 13 is provided with a first pit 130, and the second sealing film 14 is provided with a second pit 140. In this way, after the first sealing film 13 and the second sealing film 14 are heat-sealed, the first pit 130 fits with the second pit 140 to form an accommodation space for accommodating the electrode assembly 20. Alternatively, the first sealing film 13 may be a flat structure. After the first sealing film 13 and the second sealing film 14 are heat-sealed, the first sealing film 13 closes off the second pit 140 of the second sealing film 14 to form an accommodation space for accommodating the electrode assembly 20. In other embodiments, not limited to a pouch-type cell, the electrochemical device 100 may be a steel- or aluminum-shell cell or the like, without being limited in this application.

As shown in FIG. 3, the electrode assembly 20 possesses a winding central axis C perpendicular to the paper surface. The winding direction D is a direction of counterclockwise rotation along the winding central axis C shown in FIG. 3. In the winding direction D, the electrode assembly 20 includes a first section 201, a first bend section 202, a second section 203, and a second bend section 204 that are connected sequentially. In some embodiments, the first section 201 and second section 203 may be flat straight sections that are parallel to each other. In other embodiments, the first section 201 and the second section 203 may be bent sections, without being limited in this application.

An outermost coil of the first section 201 is the separator 23. Understandably, that the outermost coil of the first section 201 is the separator 23 means that, in the wound structure, the rolled outermost coil (outermost layer) of the first section 201 is the separator 23. The electrochemical device 100 further includes a first bonding piece 50 and a second bonding piece 60. The first bonding piece 50 is configured to bond the outermost coil of the electrode plates in the first section 201 together with the separator 23 located outside the outermost coil of the electrode plates in the first section 201. That is, the separator 23 outside the outermost coil of the electrode plates in the first section 201 is bonded and fixed to the outermost coil of the electrode plates in the first section 201. The second bonding piece 60 is configured to bond the outermost coil of the separator 23 in the first section 201 together with the housing 10. That is, the outermost coil of the separator 23 in the first section 201 is bonded and fixed to the housing 10. Both the first bonding piece 50 and the second bonding piece 60 may be double-sided tape. Understandably, the outermost coil of the electrode plates in the first section 201 means the rolled outermost coil (outermost layer) of the electrode plate in the wound structure in the first section 201, that is, the electrode plate that is closest to the outermost coil (outermost layer) of the wound structure in the first section 201. In some embodiments, the outermost coil of the electrode plates in the first section 201 may be either the first electrode plate 21 or the second electrode plate 22.

Understandably, in this application, the meanings of the outermost coil of the first bend section 202, the outermost coil of the second section 203, and the outermost coil of the second bend section 204 each are similar to the meaning of the outermost coil of the first section 201, and denote the part located in the outermost coil (outermost layer) in the wound structure thereof. In some embodiments, the outermost coil in the wound structure may be an electrode plate, for example, the first electrode plate 21 or the second electrode plate 22. In some embodiments, the outermost coil may be the separator 23.

A bonding force F₁ between the first bonding piece 50 and the outermost coil of the electrode plates in the first section 201 is 3 N/m to 30 N/m. Further, the bonding forces on two sides of the first bonding piece 50 may be the same. That is, the bonding force between the first bonding piece 50 and the separator 23 located outside the outermost coil of the electrode plates in the first section 201 may also be 3 N/m to 30 N/m.

A bonding force F₂ between the second bonding piece 60 and the housing 10 is 20 N/m to 150 N/m. Further, the bonding forces on two sides of the second bonding piece 60 may be the same. That is, the bonding force between the second bonding piece 60 and the outermost coil of the separator 23 in the first section 201 may also be 20 N/m to 150 N/m.

If the electrode assembly uses the first current collector (such as an aluminum foil) as an ending section, the first current collector can increase the hardness of the electrode assembly to protect the electrode assembly. Moreover, in order to reduce the relative movement of the electrode assembly in the housing, the aluminum foil ending section needs to be bonded to the inner surface of the housing through an adhesive layer, so as to implement relative fixing between the electrode assembly and the housing. When the electrochemical device is mounted inside an electronic device, another adhesive layer is usually required to bond a side of the housing to the inner side of the electronic device, where the side corresponds to the aluminum foil ending section. In this case, when the electronic device is mechanically abused (for example, dropped, colliding, or vibrating), the adhesive layer between the electronic device and the housing will pull the housing to generate a stress. The stress is transmitted to the ending part of the aluminum foil to tear the aluminum foil ending section. In addition, when drifting in the housing, the electrode assembly also pulls the aluminum foil ending section, thereby also tearing the aluminum foil ending section. The torn aluminum foil is prone to pierce the separator and cause a short circuit. On the other hand, after the aluminum foil is torn, the electrode assembly drifts in the housing more violently, and exerts an impact force on the housing. Especially, when the electrochemical device is a pouch-type cell, the electrode assembly is more prone to burst the sealing flap of the housing open and lead to hazards such as electrolyte leakage, short circuits, and fire. This leads to failure of the electrochemical device, and impairs safety of the electrochemical device in use.

In this application, the separator 23 is prolonged and the separator 23 is used as an ending, so as to form a protection layer to avoid short circuit hazards caused by wear and tear of the electrode plate inside this part of separator 23 and effectively increase the capability of the electrode assembly 20 in resisting mechanical shocks. Moreover, by virtue of the first bonding piece 50 and the second bonding piece 60, the electrode assembly 20 and the housing 10 are bonded and fixed together, thereby suppressing the drift of the electrode assembly 20 in the housing 10 during mechanical abuse, and reducing the hazards of electrolyte leakage, short circuits, and fire caused by burst of the housing 10.

Further, in this application, the bonding force F₁ of the first bonding piece 50 is set to 3 N/m to 30 N/m. The setting avoids increase of the hazards of drift of the electrode assembly 20 in the housing 10 caused by probable detachment during mechanical abuse in a case that the bonding force F₁ is exceptionally small, where the probable detachment means that the separator 23 located outside the outermost coil of the electrode plates in the first section 201 is prone to be detached from the outermost coil of the electrode plates in the first section 201. The setting also avoids increase of the hazards of tearing the first current collector 211 caused by a relatively large stress transmitted to the electrode assembly 20 and not released in time, where the stress arises when the electrode assembly 20 drifts in the housing 10 and pulls the separator 23 during mechanical abuse in a case that the bonding force F₁ is exceptionally large. Similarly, in this application, the bonding force F₂ of the second bonding piece 60 is set to 20 N/m to 150 N/m. The setting avoids increase of the hazards of drift of the electrode assembly 20 in the housing 10 caused by probable detachment during mechanical abuse in a case that the bonding force F₂ is exceptionally small, where the detachment means that the outermost coil of the separator 23 in the first section 201 is prone to be detached from the housing 10. The setting also avoids increase of the hazards of tearing the first current collector 211 caused by a relatively large stress transmitted to the electrode assembly 20 and not released in time in a case that the bonding force F₂ is exceptionally large.

In addition, when the electrode assembly 20 drifts in the housing 10 and pulls the separator 23, the separator 23 is made of a material that is more flexible than the first current collector 211, and therefore, is not prone to be torn under stress, thereby alleviating the safety problems caused by probable tearing at the end part of the first current collector 211.

In some embodiments, a ratio R of an overlap area to an area of the second bonding piece 60 is greater than or equal to 70%, where the overlap area is an area of overlap between an orthogonal projection of the first bonding piece 50 on a plane in which the second bonding piece 60 is located and the second bonding piece 60. Therefore, the bonding force F₁ of the first bonding piece 50 coordinates well with the bonding force F₂ of the second bonding piece 60 to implement firmer bonding between the electrode assembly 20 and the housing 10. When the ratio R is less than 70%, the firmness of the bonding between the electrode assembly 20 and the housing 10 is reduced, thereby increasing the hazard of tearing the first current collector 211.

In some embodiments, the outermost coil of the electrode plates in the first section 201 is the first electrode plate 21. Further, the outermost coil of the first electrode plate 21 in the first section 201 may a single-side-coated region. For example, the outermost coil of the first electrode plate 21 in the first section 201 may be a positive single-side-coated region. Specifically, the first current collector 211 includes an outer surface 2111 and an inner surface 2112 opposite to the outer surface 2111. The outer surface 2111 is not coated with a first active material layer 212. The inner surface 2112 is coated with the first active material layer 212. The outer surface 2111 of the outermost coil of the first electrode plate 21 in the first section 201 is oriented toward the outermost coil of the separator 23 in the first section 201. In other embodiments, the polarities of the first electrode plate 21 and the second electrode plate 22 are interchanged. In this case, the outermost coil of the first electrode plate 21 in the first section 201 may be a negative single-side-coated region.

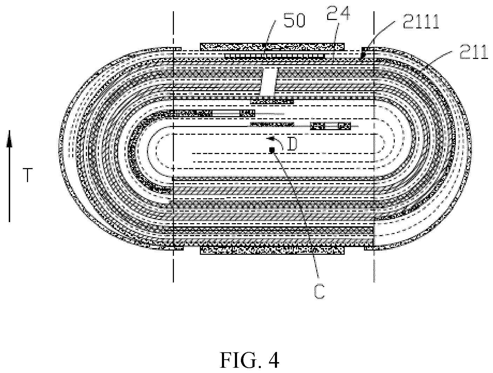

As shown in FIG. 4, in other embodiments, the outer surface of the outermost coil of the first electrode plate 21 in the first section 201 may be coated with a ceramic layer 24. The outer surface of the outermost coil of the first electrode plate 21 in the first section 201 is the first surface 2111, and the surface of the first current collector 211 (such as aluminum foil) is usually smooth. Therefore, by virtue of the relatively large specific surface area of the ceramic layer 24, the ceramic layer 24 disposed on the first surface 2111 increases friction between the first bonding piece 50 and the outermost coil of the first electrode plate 21 in the first section 201, thereby increasing the bonding force in between.

As shown in FIG. 3, the electrochemical device 100 further includes a third bonding piece 70. The third bonding piece 70 is configured to bond the outer surface of the first bend section 202 and bond the end part 2300 of the separator 23. In other words, the third bonding piece 70 serves as ending adhesive to fix the end part 2300 of the separator 23.

In some embodiments, in the winding direction D, the end part 2300 of the separator 23 is located in the first bend section 202, and the separator 23 is not disposed on the outermost coil of the second section 203. The end part 2300 of the separator 23 is located in the first bend section 202. Therefore, the third bonding piece 70 bonds the outer surface of the first bend section 202, so that the first bonding piece 50 exerts little impact on the thickness of the electrode assembly 20, and avoids increase of the thickness of the electrode assembly 20 caused by the third bonding piece 70 that bonds the first section 201 or the second section 203. As shown in FIG. 3, the thickness direction T of the electrode assembly 20 is a direction from the first section 201 to the second section 203. The third bonding piece 70 may be single-sided tape, double-sided tape, or hot-melt adhesive.

In other embodiments, when the end part 2300 of the separator 23 is close to or located at a junction between the first bend section 202 and the second section 203, in order to effectively fix the end part 2300 of the separator 23, the third bonding piece 70 may be prolonged to bond the outer surface of the second section 203. When the end part 2300 of the separator 23 is close to or located at a junction between the first bend section 202 and the first section 201, in order to effectively fix the end part 2300 of the separator 23, the third bonding piece 70 may be prolonged to bond the outer surface of the first section 201.

As shown in FIG. 3, in some embodiments, the outermost coil of the second section 203 is the first electrode plate 21, and the end part 2300 of the first electrode plate 21 is located in the second section 203. In the winding direction D, the end part 2100 of the first electrode plate 21 may be close to or located at the junction between the second section 203 and the second bend section 204, thereby improving the flatness of the electrode assembly 20 and increasing the energy density of the electrochemical device 100. The electrochemical device 100 further includes a fourth bonding piece 80. The fourth bonding piece 80 is configured to bond an outer surface of the second bend section 204 and bond the end part 2100 of the first electrode plate 21. In other words, the fourth bonding piece 80 serves as ending adhesive to fix the end part of the first electrode plate 21. The outermost coil of the second section 203 is the first electrode plate 21, and the hardness of the electrode plate is usually high, thereby increasing the hardness of the electrode assembly 20, increasing the capability of the electrode assembly 20 in resisting mechanical shocks, and improving safety. The fourth bonding piece 80 may be single-sided tape, double-sided tape, or hot-melt adhesive.

In some implementations, the single-sided tape and double-sided tape in this application each may include a substrate layer and a bonding layer. The substrate layer may be one or more selected from polypropylene, polyimide, polyethylene terephthalate, polytetrafluoroethylene, polyvinyl chloride, or polyethylene. The bonding layer may be one or more selected from acrylate, polyurethane, rubber, or silicone. The hot melt adhesive in this application may be one or more selected from polyolefin hot-melt adhesive, polyurethane hot-melt adhesive, hot-melt adhesive of ethylene or a copolymer thereof, polyester hot-melt adhesive, polyamide hot-melt adhesive, hot-melt adhesive of styrene or a block copolymer thereof, without being limited in this application.

In order to effectively fix the end part 2100 of the first electrode plate 21, the fourth bonding piece 80 may be prolonged to bond the outer surface of the first section 201.

As shown in FIG. 4, in other implementations, the outer surface of the outermost coil of the first electrode plate 21 in the second section 203 may also be coated with a ceramic layer 24, so as to increase friction between the fourth bonding piece 80 and the outermost coil of the first electrode plate 21 in the second section 203 and increase the bonding force in between. On the other hand, the ceramic layer 24 can increase a short-circuit resistance of the electrochemical device 100 during a nail penetration test or mechanical abuse, thereby improving safety.

As shown in FIG. 3, further, in the winding direction D, the end part 2200 of the second electrode plate 22 may be located in the second section 203 instead. To be specific, along the winding direction D, the separator 23 exceeds the end part 2100 of the first electrode plate 21 and the end part 2200 of the second electrode plate 22, and is further disposed in the second bend section 204, the first section 201, and the first bend section 202. The outermost coil of the second section 203 is the first electrode plate 21. Therefore, in this case, the separator 23 exceeds the end part 2100 of the first electrode plate 21 and the end part 2200 of the second electrode plate 22 by less than one coil. Understandably, when the first electrode plate 21 is a positive electrode plate and the second electrode plate 22 is a negative electrode plate, in order to reduce the hazards of lithium plating, the end part 2200 of the second electrode plate 22 exceeds the end part 2100 of the first electrode plate 21 along the winding direction D.

In other embodiments, the end part 2200 of the second electrode plate 22 may also exceed the end part 2100 of the first electrode plate 21 and be located in the first section 201. This is not limited in this application.

As shown in FIG 2 and FIG. 3, in some embodiments, the electrochemical device 100 further includes a fifth bonding piece 61. The fifth bonding piece 61 is configured to bond the outermost coil of the first electrode plate 21 in the second section 203 together with the housing 10. In other words, the second bonding piece 60 and the fifth bonding piece 61 are disposed on two opposite outer surfaces of the electrode assembly 20 respectively. The disposed fifth bonding piece 61 can further alleviate the drift of the electrode assembly 20 in the housing 10 when the electrochemical device 100 is mechanically abused, and further improve the anti-drop performance of the electrochemical device 100. The fifth bonding piece 61 may be double-sided tape.

Referring to FIG. 5, the second bonding piece 60 may face the bottom of a first pit 130 of a first sealing film 13, and the fifth bonding piece 61 may face the bottom of a second pit 140 of a second sealing film 14.

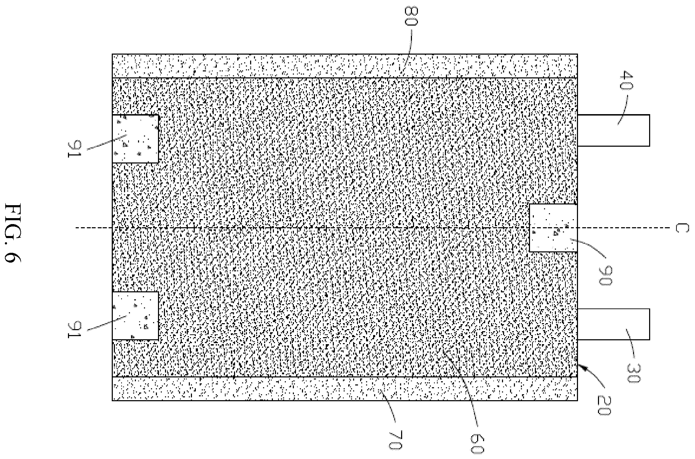

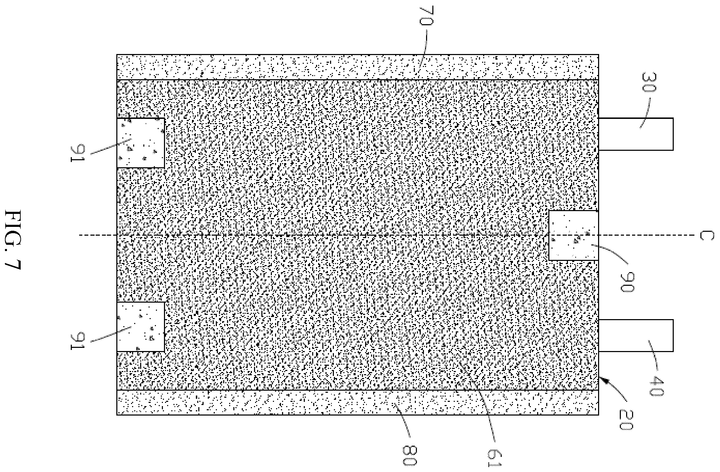

Referring to FIG. 6 and FIG. 7, in some embodiments, the electrochemical device 100 further includes head adhesive tape 90 and end adhesive tape 91. The head adhesive tape 90 is disposed at the head of the electrode assembly 20, where the first tab 30 and the second tab 40 are located, and is configured to bond the edge of the separator 23 to the outermost coil of the second section 203. The end adhesive tape 91 is disposed at the end part of the electrode assembly 20, and is configured to bond the edge of the separator 23 to the outermost coil of the second section 203. In this way, the head adhesive tape 90 and the end adhesive tape 91 can prevent the separator 23 from pleating or shrinking, where the pleats and shrinkage may lead to direct contact between the first electrode plate 21 and the second electrode plate 22 to result in short circuits.

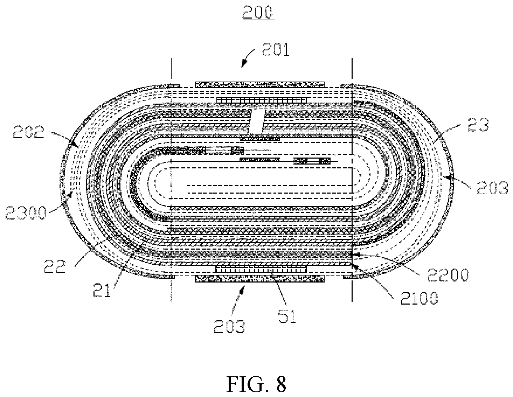

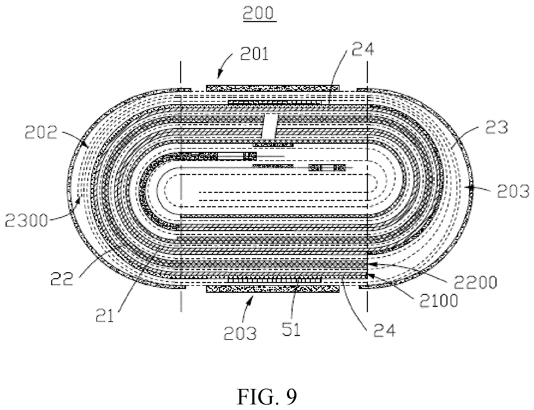

Referring to FIG 8 and FIG. 9, another embodiment of this application further provides an electrochemical device 200. The electrochemical device in this embodiment differs from the electrochemical device 100 in that the outermost coil of the second section 203 is the separator 23. In this case, the separator 23 exceeds the end part 2100 of the first electrode plate 21 and the end part 2200 of the second electrode plate 22 by more than one coil. As shown in FIG. 8, along the winding direction D, the separator 23 exceeds the end part 2100 of the first electrode plate 21 and the end part 2200 of the second electrode plate 22, and is disposed in the second bend section 204, the first section 201, the first bend section 202, the second section 203, the second bend section 204, the first section 201, and the first bend section 202 sequentially. Moreover, the end part 2100 of the first electrode plate 21 is fixed by the separator 23 located outside the end part 2100 of the first electrode plate 21. Therefore, the end part 2100 of the first electrode plate 21 may be fixed by means other than the fourth bonding piece 80. In this case, the fourth bonding piece 80 is configured to bond the separator 23 on the outer surface of the second bend section 204.

The electrochemical device 100 further includes a sixth bonding piece 51. The sixth bonding piece 51 is configured to bond the outermost coil of the electrode plates (that is, the first electrode plate 21) in the second section 203 together with the separator 23 located outside the outermost coil of the electrode plates in the second section 203. In other words, the separator 23 located outside the outermost coil of the electrode plates in the second section 203 is bonded and fixed to the outermost coil of the electrode plates in the second section 203.

As shown in FIG. 9, in other embodiments, the outer surface of the outermost coil of the first electrode plate 21 in the first section 201 may also be coated with a ceramic layer 24, so as to increase friction between the first bonding piece 50 and the outermost coil of the first electrode plate 21 in the first section 201 and increase the bonding force in between.

Similarly, the outer surface of the outermost coil of the first electrode plate 21 in the second section 203 may also be coated with a ceramic layer 24, so as to increase friction between the sixth bonding piece 51 and the outermost coil of the first electrode plate 21 in the second section 203 and increase the bonding force in between.

The electrochemical devices 100 and 200 according to this application include all devices capable of electrochemical reactions. Specifically, the electrochemical devices 100 and 200 include all types of primary batteries, secondary batteries, fuel cells, solar cells, and capacitors (such as supercapacitors). Optionally, the electrochemical devices 100 and 200 may be a lithium secondary battery, including a lithium metal secondary battery, a lithium-ion secondary battery, a lithium polymer secondary battery, and a lithium-ion polymer secondary battery.

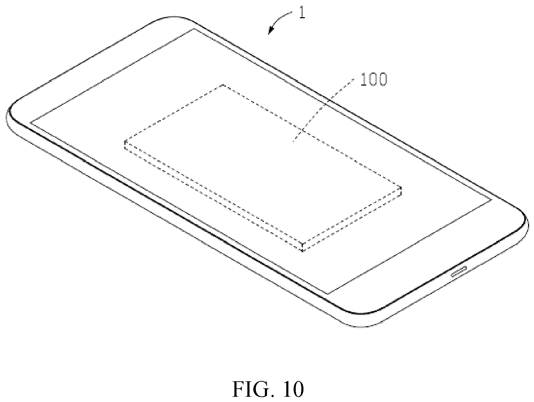

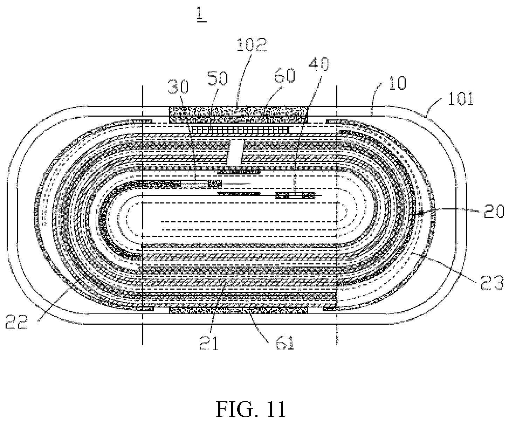

Referring to FIG. 10 and FIG. 11, an embodiment of this application further provides an electronic device 1. The electronic device 1 includes an electrochemical device 100 (or electrochemical device 200), an accommodation chamber 101, and a seventh bonding piece 102. The electrochemical device 100 is disposed in the accommodation chamber 101, and the seventh bonding piece 102 is configured to bond the housing 10 oriented to the first section 201 together with the accommodation chamber 101. In other words, the seventh bonding piece 102 is configured to bond and fix the housing 10 to the accommodation chamber 101. The seventh bonding piece 102 may be double-sided tape.

In this application, when the electronic device 1 is mechanically abused, the stress generated by the electronic device 1 pulling the housing 10 is transmitted through the seventh bonding piece 102, the housing 10, and the second bonding piece 60 sequentially to the outermost coil of the separator 23 in the first section 201. The separator 23 is made of a material that is highly flexible, and therefore, is not prone to be torn under stress, thereby alleviating the safety problems caused by probable tearing at the end part of the first current collector 211.

The electrochemical devices 100 and 200 according to this application are applicable to electronic devices 1 for use in various fields. In an embodiment, the electronic device 1 according to this application may be, but is not limited to: a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game machine, a watch, an electric tool, a flashlight, a camera, a large household battery, a lithium-ion capacitor, and the like.

The following describes this application in detail with reference to specific embodiments and comparative embodiments. This application is described below with reference to a specific preparation process and a test method using a pouch-type cell as an example of the electrochemical device. A person skilled in the art understands that the preparation method described in this application is merely an example. Any other appropriate preparation methods fall within the scope of this application.

### Embodiment 1

An electrode assembly of 76 mm in length, 63 mm in width, and 5.2 mm in thickness is adopted. The electrode assembly ends with a separator. The end parts of both the first electrode plate and the second electrode plate are located in the second section. The current collector of the first electrode plate is an aluminum foil. The separator exceeds the end part of the first electrode plate and the end part of the second electrode plate by less than one coil, and the end part of the separator is located in the first bend section.

The first bonding piece is configured to bond the outermost coil of the electrode plates in the first section together with the separator located outside the outermost coil of the electrode plates in the first section. The second bonding piece is configured to bond the outermost coil of the separator in the first section together with an aluminum plastic film. Both the first bonding piece and the second bonding piece are double-sided tape. The bonding force F₁ between the first bonding piece and the outermost coil of the electrode plates in the first section is 3 N/m. The bonding force F₂ between the second bonding piece and the aluminum plastic film is 20 N/m. The ratio R of an overlap area to an area of the second bonding piece is 70%, where the overlap area is an area of overlap between an orthogonal projection of the first bonding piece on a plane in which the second bonding piece is located and the second bonding piece.

The electrode assembly and the electrolytic solution are packaged into the aluminum plastic film to obtain an electrochemical device.

### Embodiments 2 to 8

Differences are: the bonding force F₁ of the first bonding piece, the bonding force F₂ of the second bonding piece, or the ratio R in Embodiments 2 to 8 is different from that in Embodiment 1, but Embodiments 2 to 7 simultaneously satisfy the following conditions: F₁ is 3 N/m to 30 N/m and F₂ is 20 N/m to 150 N/m.

### Comparative Embodiments 1 to 2

Differences are: the bonding force F₁ of the first bonding piece, the bonding force F₂ of the second bonding piece, or the ratio R in Comparative Embodiments 1 to 2 is different from that in Embodiment 1, but Comparative Embodiments 1 to 2 do not satisfy the following conditions: F₁ is 3 N/m to 30 N/m and F₂ is 20 N/m to 150 N/m.

### Comparative Embodiments 3 to 4

Differences are: the bonding force F₁ of the first bonding piece or the bonding force F₂ of the second bonding piece in Comparative Embodiments 3 to 4 is different from that in Embodiment 1, and F₁ and F₂ do not simultaneously satisfy the following conditions: F₁ is 3 N/m to 30 N/m and F₂ is 20 N/m to 150 N/m.

### Comparative Embodiment 5

Differences from Embodiment 1 are that in Comparative Embodiment 3, an aluminum foil is used as an ending. The first bonding piece is omitted, and the second bonding piece is configured to bond the outermost coil of the aluminum foil in the first section together with the aluminum plastic film. The bonding force F₂ between the second bonding piece and the aluminum plastic film is 20 N/m.

The method for testing the bonding force of the first bonding piece is: disassembling the electrochemical device that has been discharged until a voltage of 2.8 V, and keeping the bonding interface in good condition between the separator and the electrode plate; putting the disassembled electrochemical device into a die-cutting machine for die-cutting into test strips of 4 to 8 mm; sticking double-sided tape onto a steel sheet, and affixing the separator in the test strips onto the double-sided tape and fixing the separator properly; fixing one end of the electrode plate firmly with a hard paper strip of the same width to obtain a sample for testing; fixing one end of the steel sheet onto the lower end of a universal tensile testing machine, pulling the paper strip reversely at an angle of 180° and fixing it onto the upper end of the tensile testing machine, and testing at a speed of 50 mm/min; recording an average value of a steady section of a tensile curve after completion of the test; and testing 10 samples concurrently in each group.

The method for testing the bonding force of the second bonding piece is: disassembling the electrochemical device that has been discharged until a voltage of 2.8 V, and keeping the bonding interface in good condition between the separator and the housing; putting the disassembled electrochemical device into a die-cutting machine for die-cutting into test strips of 4 to 8 mm; sticking double-sided tape onto a steel sheet, and affixing the separator in the test strips onto the double-sided tape and fixing the separator properly; fixing one end of the housing firmly with a hard paper strip of the same width to obtain a sample for testing; fixing one end of the steel sheet onto the lower end of a universal tensile testing machine, pulling the paper strip reversely at an angle of 180° and fixing it onto the upper end of the tensile testing machine, and testing at a speed of 50 mm/min; recording an average value of a steady section of a tensile curve after completion of the test; and testing 10 samples concurrently in each group.

A drop test is performed on the electrochemical device in each embodiment and each comparative embodiment, and the corresponding drop test results are recorded in Table 1. Every 10 electrochemical devices prepared in each embodiment and each comparative embodiment are tested in a group. A specific method of the drop test is: fully charging the battery first, adjusting the State of Charge (SOC) to 100%, leaving the battery to stand for 2 hours, and then measuring the voltage and internal resistance of the battery before dropping; putting the battery into a jig chamber, and putting a 1 mm-thick silicone pad on the surface of the battery, pressing the battery with a 5 kg pressing block for 12 hours, and then mounting the top cover plate of the jig chamber; dropping the jig chamber containing the battery from a 1.8 meter height to the steel sheet for 7 rounds by using an automatic dropping device, where, in each round, the head part, the end part, the upper right corner, the lower right corner, the upper left corner, and the lower left corner of the jig chamber land on the steel sheet respectively, so that the battery is dropped for 42 times in total; measuring the voltage of the battery after each round of dropping; stopping dropping when the battery catches fire, heats up, leaks electrolyte, or incurs a voltage drop greater than or equal to 50 mV; if none of such phenomena occurs, keeping the dropping test until 7 rounds of dropping is completed; disassembling the cell after 7 rounds of dropping, and checking the test results to obtain the percentage of tearing of the aluminum foil, the percentage of blowoff of the sealing flap of the housing, and the percentage of failure caused by a voltage drop greater than or equal to 50 mV.

**Table 1**

| | Bonding force F₁ (N/m) | Bonding force F₂ (N/m) | Ratio R | Percentage of tearing of aluminum foil | Percentage of blowoff of sealing flap | Percentage of voltage drop failure |
|---|---|---|---|---|---|---|
| Embodiment 1 | 3 | 20 | 70% | 0/10 | 0/10 | 0/10 |
| Embodiment 2 | 3 | 50 | 70% | 0/10 | 0/10 | 0/10 |
| Embodiment 3 | 25 | 100 | 70% | 0/10 | 0/10 | 0/10 |
| Embodiment 4 | 30 | 150 | 70% | 0/10 | 0/10 | 0/10 |
| Embodiment 5 | 30 | 70 | 70% | 0/10 | 0/10 | 0/10 |
| Embodiment 6 | 20 | 70 | 70% | 0/10 | 0/10 | 0/10 |
| Embodiment 7 | 20 | 70 | 90% | 0/10 | 0/10 | 0/10 |
| Embodiment 8 | 20 | 70 | 68% | 2/10 | 1/10 | 3/10 |
| Comparative Embodiment 1 | 1 | 15 | 70% | 5/10 | 5/10 | 6/10 |
| Comparative Embodiment 2 | 35 | 155 | 68% | 3/10 | 1/10 | 5/10 |
| Comparative Embodiment 3 | 20 | 15 | 70% | 3/10 | 3/10 | 4/10 |
| Comparative Embodiment 4 | 1 | 50 | 70% | 4/10 | 3/10 | 3/10 |
| Comparative Embodiment 5 | / | 20 | / | 10/10 | 10/10 | 10/10 |

In Table 1, if the percentage of tearing of the aluminum foil is 0/10, it indicates that among the 10 electrochemical devices tested, the number of electrochemical devices with the aluminum foil being torn is 0. If the percentage of tearing of the aluminum foil is 10/10, it indicates that among the 10 electrochemical devices tested, the number of electrochemical devices with the aluminum foil being torn is 10. The meanings of other percentage values can be deduced similarly.

As can be seen from the data in Table 1, the percentage of tearing of the aluminum foil, the percentage of blowoff of the sealing flap, and the percentage of voltage drop failure of the dropped electrochemical devices in Embodiments 1 to 8 are lower than those in Comparative Embodiments 1 to 5. This indicates that in Embodiments 1 to 8, when the bonding force of the first bonding piece and the bonding force of the second bonding piece satisfy specific conditions, the anti-drop performance of the electrochemical device is improved, and the safety is also improved significantly. In the table above, the ratio R in Embodiment 8 is lower than 70%, making the safety performance be lower than that in Embodiments 1 to 7.

The percentage of tearing of the aluminum foil, the percentage of blowoff of the sealing flap, and the percentage of voltage drop failure of the dropped electrochemical devices in Embodiment 1 are lower than those in Comparative Embodiment 5, indicating that the structure that ends with the separator helps to improve the safety performance of the electrochemical device.

Finally, it needs to be noted that the foregoing embodiments are merely intended for describing the technical solutions of this application but not intended as a limitation. Although this application is described in detail with reference to the foregoing optional embodiments, a person of ordinary skill in the art understands that modifications or equivalent replacements may be made to the technical solutions of this application without departing from the spirit and scope of the technical solutions of this application.

## Claims

1. An electrochemical device, wherein the electrochemical device comprises:
a housing;
an electrode assembly comprising electrode plates and a separator, wherein the electrode plates comprise a first electrode plate and a second electrode plate, the separator is disposed between the first electrode plate and the second electrode plate, the electrode assembly is of a wound structure and located in the housing, and in a winding direction, the electrode assembly comprises a first section, a first bend section, a second section, and a second bend section connected sequentially, and an outermost coil of the first section is the separator;
a first bonding piece configured to bond an outermost coil of the electrode plates in the first section together with the separator located outside the outermost coil of the electrode plates in the first section, wherein a bonding force between the first bonding piece and the outermost coil of the electrode plates in the first section is 3 N/m to 30 N/m; and
a second bonding piece configured to bond an outermost coil of the separator in the first section together with the housing, wherein a bonding force between the second bonding piece and the housing is 20 N/m to 150 N/m.

2. The electrochemical device according to claim 1, wherein a ratio of an overlap area to an area of the second bonding piece is greater than or equal to 70%, wherein the overlap area is an area of overlap between an orthogonal projection of the first bonding piece on a plane in which the second bonding piece is located and the second bonding piece.

3. The electrochemical device according to claim 1, wherein the outermost coil of the electrode plates in the first section is the first electrode plate, the first electrode plate comprises a first current collector and a first active material layer disposed on the first current collector, the outermost coil of the first current collector in the first section comprises an outer surface, the outer surface is oriented toward the outermost coil of the separator in the first section, and the outer surface is not coated with the first active material layer.

4. The electrochemical device according to claim 3, wherein the outer surface is coated with a ceramic layer.

5. The electrochemical device according to claim 1, wherein, in a winding direction, an end part of the separator is located at the first bend section, the electrochemical device further comprises a third bonding piece, and the third bonding piece is configured to bond an outer surface of the first bend section and bond the end part of the separator.

6. The electrochemical device according to claim 5, wherein the third bonding piece is further configured to bond an outer surface of at least one of the first section or the second section.

7. The electrochemical device according to claim 5, wherein an outermost coil of the second section is the first electrode plate, and in the winding direction, an end part of the first electrode plate is located at the second section, the electrochemical device further comprises a fourth bonding piece, and the fourth bonding piece is configured to bond an outer surface of the second bend section and bond the end part of the first electrode plate.

8. The electrochemical device according to claim 7, wherein the electrochemical device further comprises a fifth bonding piece, and the fifth bonding piece is configured to bond the outermost coil of the first electrode plate in the second section together with the housing.

9. The electrochemical device according to claim 5, wherein an outermost coil of the second section is the separator, the electrochemical device further comprises a sixth bonding piece, and the sixth bonding piece is configured to bond the outermost coil of the electrode plates in the second section together with the separator located outside the outermost coil of the electrode plates in the second section.

10. An electronic device, comprising the electrochemical device according to any one of claims 1 to 9, wherein the electronic device further comprises an accommodation chamber and a seventh bonding piece, the electrochemical device is disposed in the accommodation chamber, and the seventh bonding piece is configured to bond a housing oriented to the first section together with the accommodation chamber.
